# EUROPÄISCHE PATENTSCHRIFT

(11) **EP 1 230 429 B1**
(45) Veröffentlichungstag und Bekanntmachung des Hinweises auf die Patenterteilung: **22.09.2004**
(21) Anmeldenummer: 00983001.9
(22) Anmeldetag: 13.10.2000
(51) Int. Cl.: C23C 30/00, C23C 24/00

(54) **HERSTELLUNGSVERFAHREN FÜR EINE KOMPONENTE MIT SCHICHT**
METHOD FOR PRODUCING A COMPONENT WITH LAYER
PROCEDE DE REALISATION D'UN ELEMENT RECOUVERT D'UNE COUCHE

(30) Priorität: 14.10.1999 DE 19949541
(43) Veröffentlichungstag der Anmeldung: 14.08.2002
(73) Patentinhaber: FORSCHUNGSZENTRUM JÜLICH GMBH, 52425 Jülich (DE)
(72) Erfinder: QUADAKKERS, Willem, J., NL-6363 EG Wijnandsrade (NL); SHEMET, Vladimir, 52428 Jülich (DE); SINGHEISER, Lorenz, 52428 Jülich (DE)
(86) Internationale Anmeldenummer: PCT/DE2000/003613
(87) Internationale Veröffentlichungsnummer: WO 2001/027349

(56) Entgegenhaltungen:
- EP-A- 0 546 756
- DE-A- 19 710 592

## Beschreibung

Die Erfindung betrifft ein Verfahren zur Herstellung einer Schicht auf der Oberfläche einer Komponente, insbesondere einer Komponente aus Titan, einer Titanlegierung oder einer intermetallischen Phase auf Basis von Titan.

Titan, Titanlegierungen und intermetallische Phasen auf Titanbasis zeichnen sich durch eine hohe mechanische Festigkeit bei gleichzeitig geringer Dichte aus. Somit finden diese Komponenten vielfach Anwendung als Konstruktionswerkstoff für Bauteile, bei denen ein geringes Gewicht und/oder eine hohe dichtespezifische Festigkeit erforderlich ist. Hierbei sind insbesondere Komponenten im Flugzeug- und Triebwerkbau, rotierende Teile in stationären Gasturbinen sowie bewegende Teile, wie z. B Ventile, in Verbrennungsmotoren zu nennen. Im Vergleich zum wichtigsten metallischen Leichtbauwerkstoff Aluminium zeichnen sich Titan, Titanlegierungen und intermetallische Phasen auf Titanbasis durch eine wesentlich höhere Festigkeit bei hohen Temperaturen aus. Hierdurch kommen diese Materialien, abhängig von der jeweiligen Legierungszusammensetzung, als Konstruktionswerkstoffe für Bauteile mit Betriebstemperaturen bis zu etwa 800° C in Frage, während die Anwendung von Aluminium und Aluminiumlegierungen auf Betriebstemperaturen unterhalb etwa 400°C begrenzt ist.

Ein wesentlicher Nachteil von Titan, Titanlegierungen und intermetallischen Phasen auf Titanbasis beim Hochtemperatureinsatz ist deren mangelhafte Oxidationsbeständigkeit. Die Komponenten bilden im Kontakt mit Sauerstoff bereits bei relativ niedrigen Temperaturen schnellwachsende Deckschichten auf TiO₂-Basis, wodurch die Einsatztemperatur von Titan auf etwa 500° C, die von Titanlegierungen auf etwa 550° C und die von den meisten intermetallischen Phasen auf Titanbasis (abgesehen von einigen Titansiliziden) auf 600 bis 650° C begrenzt ist. Durch legierungstechnische Maßnahmen lässt sich die Oxidationsbeständigkeit zwar geringfügig verbessern, jedoch werden hierdurch die mechanischen Eigenschaften derart beeinträchtigt, dass die oxidationsverbessernden Maßnahmen kaum zu einer Erweiterung der Anwendungsmöglichkeiten der genannten Komponenten führt.

Schutzschichten zur Vermeidung der oxidationsbedingten Schädigung von Komponenten aus den genannten Werkstoffgruppen sind nur sehr bedingt einsetzbar. Konventionelle Schichtsysteme auf der Basis NiCoCrAl zeichnen sich durch eine mangelhafte Kompatibilität mit Titan, Titanlegierungen und intermetallischen Phasen auf Titanbasis aus. Dies ist auf die Unterschiede im thermischen Ausdehnungsverhalten, zum anderen auf die Bildung spröder Phasen, bedingt durch Diffusionsvorgänge an der Grenzfläche Grundwerkstoff/Schutzschicht, zurückzuführen.

Sprödphasenbildung ist auch der Grund dafür, dass konventionelle Alitierschichten zum Oxidationsschutz der genannten Komponenten im Allgemeinen nicht geeignet sind. Kommerzielle Systeme, die auf Chromoxiddeckschichten basieren, kommen als Schutzschicht grundsätzlich nicht in Frage, da Titanoxide thermodynamisch stabiler sind als Chromoxid.

Aus DE 197 10 592 A sind Bauteile aus oxidationsbeständigen Legierungen auf Basis von γ-TiAl mit Zusatz von Ag, Cu, Re oder Pd bekannt. Als bevorzugte Legierungen werden unter anderem Ti-48Al-5 und Ti-48Al-2Cr-5Ag (Zahlen in at-%) genannt. Die Legierungen werden vor einem technischen Einsatz in einer stickstoffhaltigen Atmosphäre bei Temperaturen zwischen 700 und 900 °C voroxidiert.

In EP 0546 756 A2 wird eine Beschichtung von metallischen Bauteilen mit Schutzschichten aus teiloxidierten Legierungen, bevorzugt auf Fe-, Ni- oder Cr-Basis mit Cr, Al, und/oder Si offenbart. Die Schicht wird durch Aufbringen von Legierungspartikeln mit den reaktiven Elementen Cr, Al, und/oder Si auf dem metallischen Substrat hergestellt, wobei Teile der Partikel schon voroxidiert sind. Als Aufbringungsverfahren werden Plasmaspritzen, Flammenspritzen, thermisches Spritzen, Vakuumspritzen und isostatisches Spritzen angegeben.

Aufgabe der Erfindung ist es, ein Verfahren zur Herstellung einen Schicht auf einer Komponente aus Titan, einer Titanlegierung oder einer intermetallischen Phase auf Titanbasis zu schaffen, so dass die Schicht im Temperaturbereich von 500 bis 1000°C einen guten Oxidations- bzw. Korrosionsschutz für die Komponente ausbildet.

Die Aufgabe wird durch das Verfahren gemäß Anspruch 1 gelöst. Vorteilhafte Ausgestaltungen sind den rückbezogenen Ansprüchen 2 und 3 zu entnehmen.

Eine als Oxidationsschutz geeignete Schicht für eine Komponente ist eine Legierung auf Basis von Ti₅Al₃O₂. Sie weist geringe Mengen an Silber im Bereich von 0,5 bis 10 at-%, insbesondere im Bereich von 2 bis 5 at-% auf, welches zum Teil das Ti ersetzt. Die Schicht basiert somit auf einer (Ti,Ag)₅Al₃O₂-Legierung, wobei der Ersatz von Titan durch Silber nicht zwingend stöchiometrisch erfolgt. Der Sauerstoffanteil in dieser Phase kann, abhängig vom vorliegenden Sauerstoffpartialdruck zwischen 10 und 22 at-% variieren.

Besonders geeignet als Komponenten sind Werkstoffe aus Titan, einer Titanlegierung oder einer intermetallischen Phase auf Basis von Titan, da hier die physikalische und chemische Kompatibilität zwischen Werkstoff und Schutzschicht sehr hoch sind. Es sind aber auch ganz allgemein Stähle als Komponenten denkbar.

Diese Schicht auf der Oberfläche einer Komponente bildet im Temperaturbereich von 500 bis 1000° C in Kontakt mit Sauerstoff eine langsam wachsende Deckschicht auf Al₂O₃-Basis aus, und bewirkt somit einen effektiven O-xidations- bzw. Korrosionsschutz für die Komponente. Die nahezu gasdichte Al₂O₃-Deckschicht verhindert eine weitere Diffusion von Metall- oder Sauerstoffionen in die Schicht und/oder die Komponente. Im Gegensatz zu anderen Ti-haltigen Schutzschichten, bei denen es sowohl in Luft als auch in stickstoffhaltiger Umgebung häufig zu Umwandlungen in Ti₃Al kommt (siehe N. Zheng et al., Sripta Metallurgica et Materialia, Vol. 33(1), 1995 , Seiten 47-53), ist die Schicht mit Silber besonders langzeitstabil.

Es hat sich herausgestellt, dass Chrom die Oxidationsbeständigkeit der erfindungsgemäßen Schicht vorteilhaft weiter verbessert. Daher weist eine weitere geeignete Schicht eine Zusammensetzung auf Basis einer (Ti,Ag,Cr)₅Al₃O₂-Legierung auf. Das heißt, dass in einer ternären Ti-Al-Oxid-Verbindung das Titan nicht nur teilweise durch Ag sondern auch noch teilweise durch Chrom ersetzt wird. Die Chromgehalte in der Schicht liegen dabei im Bereich von 0,5 bis 15 at-%, insbesondere aber im Bereich von 5-10 at-%. Diese Chromzusätze beeinflussen die Oxidationsraten positiv und führen so zu einer nochmals verbesserten Schutzschicht.

Bei den Angaben der Legierungszusammensetzung für die Schicht sind typische Legierungszusätze nicht mit berücksichtigt. Legierungszusätze sind unter anderem Nb, Ta, Cr, Mn oder Silizium. Diese Elemente können mit Gehalten im Bereich von jeweils 1 bis 3 at-% vorliegen.

Verfahren zur Herstellung der vorgenannten Schicht werden anhand von Ausführungsbeispielen und Figuren verdeutlicht. Die Schicht kann beispielsweise auf die drei folgenden Arten hergestellt werden (die zu schützende Komponente, die aus Titan, aus einer Titanlegierung oder aus einer intermetallischen Phase auf Titanbasis besteht oder eine andere Komponente wird dabei als "Grundwerkstoff" bezeichnet).

Für die Herstellung einer chromhaltigen Schicht würden analog entsprechend zusätzlich chromhaltige Materialien verwendet.

Prinzipiell sind die schon bekannten Verfahren, wie Laserlegieren, Plasmaspritzen, Sputtern dazu geeignet, die erfindungsgemäßen Schichten auf die entsprechenden Komponenten aufzubringen, ebenso wir das PVD-Verfahren (plasma-vapor-deposition).

### 1) Pulvermetallurgische Methode (nicht erfindungsgemäß)

Eine Mischung aus Ti- und TiO₂-Pulver (Verhältnis etwa 7/3) wird bei einer Temperatur von 1400 - 1600° C (bevorzugt 1550° C) für 1 - 100 h (bevorzugt 4 h) unter Vakuum (1*10⁻⁴ bar) gesintert. Das erhaltene sauerstoffhaltige Pulver wird anschließend mit Al und Ag in einem Verhältnis, das so gewählt wird, dass die Endzusammensetzung welche der ternären Phase Ti₅Al₃O₂ entspricht, gemischt, mit der Einschränkung, dass ein Teil des Titans entsprechend obigen Konzentrationsangaben (0,5 - 10 at-%, bevorzugt 2 - 5 at-%), durch Ag ersetzt wird. Damit entsteht eine Phase entsprechend (Ti,Ag)₅Al₃O₂, wobei das Silber das Titan nicht zwingend stöchiometrisch ersetzt. Eine typische Zusammensetzung der so hergestellten Schutzschicht wäre somit auch Ti_{4,8}Ag_{0,3}Al_{2,9}O₂.

Aus der erhaltenen Pulvermischung kann mittels herkömmlicher Beschichtungsverfahren, die bei niedrigen Sauerstoffpartialdrücken arbeiten (z. B. Vakuum-Plasmaspritzen), auf den zu schützenden Grundwerkstoff eine Schicht von typischerweise 5 bis 500 µm aufgebracht werden. Die eingestellte Schichtdicke ist abhängig von den vorgesehenen Betriebsbedingungen: hohe Temperaturen (800 - 850° C) und/oder lange Betriebszeiten werden eine Dicke Schutzschicht (z. B. 200 µm) erfordern, während für niedrigere Temperaturen (700-750 °C) dünnere Schichten (z. B. 10 µm) ausreichen.

### 2) Legierungstechnische Methode (nicht erfindungsgemäß)

Es wird eine Titanlegierung mit 40 - 60 at-% Al, vorteilhaft 48 - 55 at-%, und 0,5 - 10 at-% Ag, insbesondere 1 - 3 at-%, mittels konventioneller schmelzmetallurgischer Verfahren hergestellt. Eine typische optimale Zusammensetzung wäre somit 50 at-% Al, 2 at-% Ag und 48 at-% Ti.

Das Titan kann gegebenenfalls teilweise durch Legierungszusätze, die üblicherweise in intermetallischen Phasen auf TiAl-Basis vorhanden sind, wie z. B. Nb, Ta, Cr, Mn oder Silizium ersetzt werden. Der typische Gehalt dieser Elemente liegt dann bei ca. 1 - 3 at-%, wenn sie zur Festigkeitssteigerung zulegiert werden. Diese Legierung kann anschließend folgendermaßen auf den Grundwerkstoff in Form einer Schicht von typischerweise 5 - 500 µm abgeschieden werden:
- Physikalische und/oder chemische Dampfphasenabscheidung (bei niedrigem Sauerstoffpartialdruck), z. B. Kathodenzerstäuben,
- Verdüsung der Legierung zu einem Pulvergemisch mit nachfolgender Aufbringung auf den Grundwerkstoff durch Plasmaspritzen bei niedrigen Sauerstoffdrücken (z. B. Vakuum-Plasmaspritzen).

Die derartig aufgebrachte Schicht aus Ti-Al-Ag-Legierung wird bei Betriebstemperaturen von z. B. 500 - 900° C durch Al-Verarmung an der Oberfläche automatisch die Ag-haltige ternäre Phase Ti₅Al₃O₂, entsprechend der unter 1) beschriebenen Zusammensetzung, ausbilden. Somit wird dann während des Hochtemperatureinsatzes auf dieser Oberfläche die gewünschte schützende Deckschicht auf Al₂O₃-Basis entstehen.

### 3) Oberflächenanreicherung

Für den Fall, dass der Grundwerkstoff eine Ti-Legierung bzw. eine intermetallische Phase aus Ti-Basis aufweist, die bereits hohe Al-Gehalte enthält (etwa 40 - 60 at-%), kann die neue Schutzschicht durch Anreicherung der Grundwerkstoffoberfläche mit Ag erzeugt werden. Hierzu wird eine Silberschicht (2 - 20 µm Dicke) mittels konventioneller Verfahren auf den Grundwerkstoff abgeschieden. Anschließend wird die Komponente in sauerstoffarmer Umgebung (Schutzgas oder Vakuum) bei einer Temperatur zwischen 700 und 880° C für 1 bis 24 h wärmebehandelt. Hierdurch diffundiert das Ag in die Grundwerkstoffoberfläche hinein, und beim anschließenden Hochtemperatureinsatz der Komponente in sauerstoffhaltiger Betriebsatmosphäre bildet sich an der Oberfläche der Komponente automatisch die gewünschte Ag-haltige ternäre Phase auf der Basis Ti₅Al₃O₂ aus, auf der anschließend die schützende Al₂O₃-Schicht entsteht.

Langzeitversuche haben gezeigt, dass die erfindungsgemäße Schicht bei Temperaturen von 800° C über 6000 h stabil blieb. Die Oxidationsrate der erfindungsgemäßen Schicht ist dabei sehr gering. Beispielsweise ist sie bei 800° C geringer als 1*10⁻¹² g²/cm⁴ s. Vorteilhaft ist sie bei diesen Temperaturen sogar geringer als 1*10⁻¹³ g²/cm⁴ s.

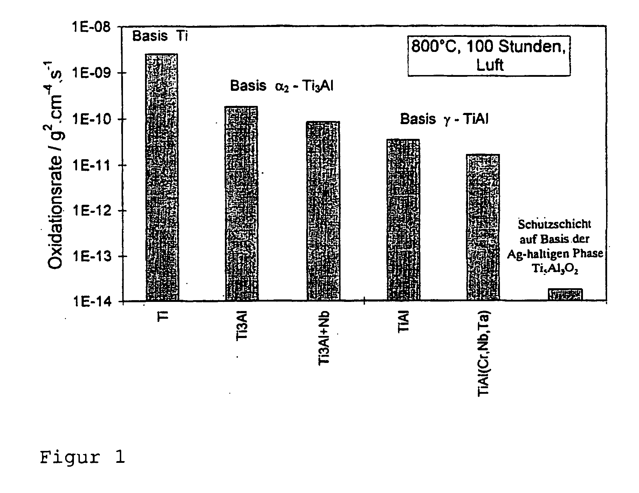

- Figur 1:: Typische Werte für Oxidationsraten der erfindungsgemäßen Schutzschicht auf Basis der Aghaltigen ternären Phase Ti₅Al₃O₂ während der Auslagerung in Luft bei 800° C in Vergleich zu Werten für Titan, für intermetallische Phasen vom Typ α₂-Ti₃Al und für intermetallische Phasen vom Typ γ-TiAl.

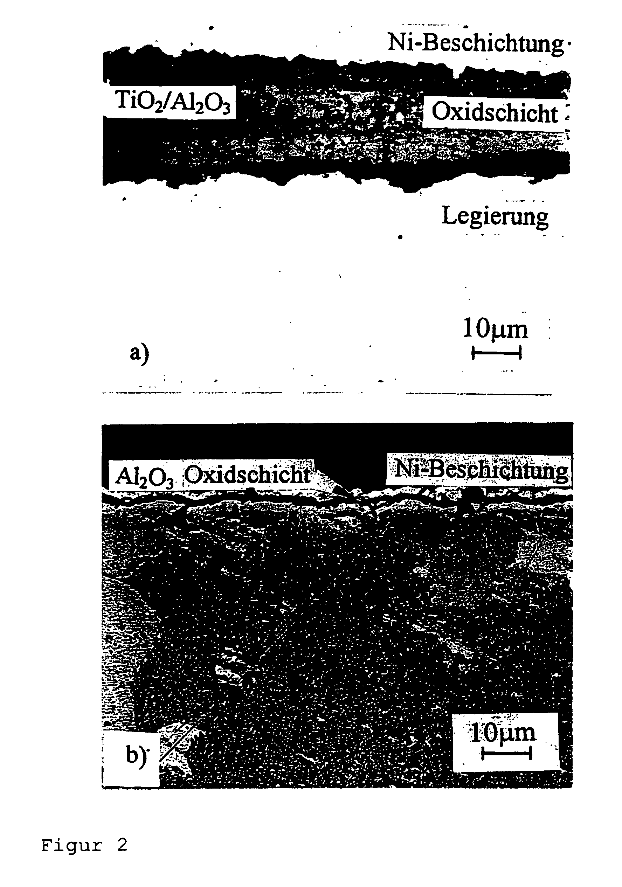

- Figur 2:: Metallographische Querschnitte zum Vergleich der Dicke oxidischer Deckschichten auf verschiedenen Materialien nach Auslagerung an Luft bei 800° C.
a) Typischer Grundwerkstoff γ-TiAl nach 100 h Auslagerung.
b) Die neue Schutzschicht auf Basis der Ag-haltigen ternären Phase Ti₅Al₃O₂ nach 1000 h Auslagerung.

## Patentansprüche

1. Verfahren zur Herstellung einer Ag-haltigen ternären Schicht auf der Oberfläche einer Komponente, wobei die Schicht auf einer Ti₅Al₂O₃-Legierung basiert und wobei die Schicht 0,5 bis 10 at-% Silber aufweist, welches das Ti teilweise ersetzt,
mit den Schritten
- eine Silberschicht wird zur Bildung der Ag-haltigen ternären Schicht auf die Komponente, die aus einer Titanlegierung oder aus einer intermetallischen Phase auf Titanbasis besteht, und einen Al-Gehalt zwischen 40 und 60 at-% aufweist, aufgebracht und unter Schutzgas oder Vakuum auf Temperaturen oberhalb von 700 °C erwärmt, wobei die so beschichtele komponente auschließend einer Hochtemperaturbehandlung in Sauerstoffhaltiger Atmosphäre unterzogen wird, so daß sich die Ag-haltigeternäre Phase auf der Basis Ti₅Al₂O₃ auf der Oberfläche der komponente ausbildet.

2. Verfahren nach vorhergehendem Anspruch 1 bei dem die aufgebrachte Silberschicht eine Dicke von 2 bis 20 µm aufweist.

3. Verfahren nach einem der vorhergehenden Ansprüche 1 oder 2, bei dem die Komponente mit der aufgebrachten Silberschicht für einen Zeitraum von 1 bis 24 Stunden wärmebehandelt wird.

## Claims

1. A process for of producing an Ag-containing ternary layer on the surface of a component, wherein the layer is based on a Ti₅Al₂O₃ alloy and wherein the layer comprises 0.5 to 10 atomic % silver, which partly replaces Ti comprising the following steps:
- in order to form the Ag-containing ternary layer a silver layer is deposited on the component, which consists of a titanium alloy or of a titanium-based intermetallic phase and which has an Al content between 40 and 60 atomic %, and is heated to temperatures above 700°C under a protective gas or under vacuum, wherein the component which is coated in this manner is subsequently subjected to high-temperature treatment in an atmosphere which contains oxygen, so that the Ag-containing ternary phase based on Ti₅Al₂O₃ is formed on the surface of the component.

2. A process according to the preceding claim 1, wherein the deposited silver layer has a thickness of 2 to 20 µm.

3. A process according to either one of the preceding claims 1 or 2, wherein the component with the deposited silver layer is heat-treated for a period of 1 to 24 hours.

## Revendications

1. Procédé de réalisation d'une couche ternaire contenant de l'Ag à la surface d'un composant, la couche étant à base d'un alliage de Ti₅Al₂O₃, et la couche présentant 0,5 à 10 % d'argent qui remplace partiellement le Ti,
comprenant les étapes suivantes
- pour la formation de la couche ternaire contenant de l'Ag, une couche d'argent est appliquée sur le composant qui est constitué d'un alliage de titane ou d'une phase intermétallique à base de titane, et qui présente une teneur en Al comprise entre 40 et 60 %, puis chauffée sous gaz inerte ou à vide à des températures supérieures à 700°C, le composant ainsi revêtu étant ensuite soumis à un traitement à température élevée dans une atmosphère contenant de l'oxygène, de telle sorte que la phase ternaire à base de Ti₅Al₂O₃ contenant de l'Ag se forme à la surface du composant.

2. Procédé selon la revendication précédente 1, dans lequel la couche d'argent appliquée présente une épaisseur allant de 2 à 20 µm.

3. Procédé selon l'une des revendications 1 ou 2 précédentes, dans lequel le composant revêtu de la couche d'argent est soumis à un traitement thermique d'une durée allant de 1 à 24 heures.
